# FASCICULE DE BREVET EUROPEEN

(11) **EP 1 796 023 B1**
(45) Date de publication et mention de la délivrance du brevet: **14.04.2010**
(21) Numéro de dépôt: 06024673.3
(22) Date de dépôt: 29.11.2006
(51) Int. Cl.: G06K 19/07

(54) **Circuit intégré sans contact comprenant un circuit d'alimentation électrique à haut rendement**
Kontaktloser integrierter Schaltkreis mit einer Energieversorgungsschaltung hohen Wirkungsgrades
Contactless integrated circuit comprising a highly efficient power supply circuit

(30) Priorité: 08.12.2005 FR 0512441
(43) Date de publication de la demande: 13.06.2007
(73) Titulaire: STMICROELECTRONICS SA, 92120 Montrouge (FR); UNIVERSITE D'AIX-EN-PROVENCE MARSEILLE I, 13331 Marseille Cedex (FR)
(72) Inventeur: Bergeret, Emmanuel, 13001 Marseille (FR); Gaubert, Jean, 13013 Marseille (FR); Pannier, Philippe, 13012 Marseille (FR); Rizzo, Pierre, Résidence Port Royal, 13100 Aix en Provence (FR)
(74) Mandataire: Marchand, André

(56) Documents cités:
- US-A- 5 982 647
- US-A- 2002 149 482
- US-A1- 2002 056 865
- US-B1- 6 437 609

## Description

L'invention concerne un procédé pour alimenter électriquement un circuit électronique à partir de signaux d'antenne haute fréquence.

L'invention concerne notamment mais non exclusivement les circuits intégrés sans contact fonctionnant en présence d'un champ électrique UHF (300 MHz-3 GHz). De tels circuits intégrés peuvent être entièrement passifs, c'est-à-dire dépourvus d'une source d'alimentation autonome. Ils sont alors alimentés électriquement exclusivement à partir de signaux d'antenne UHF.

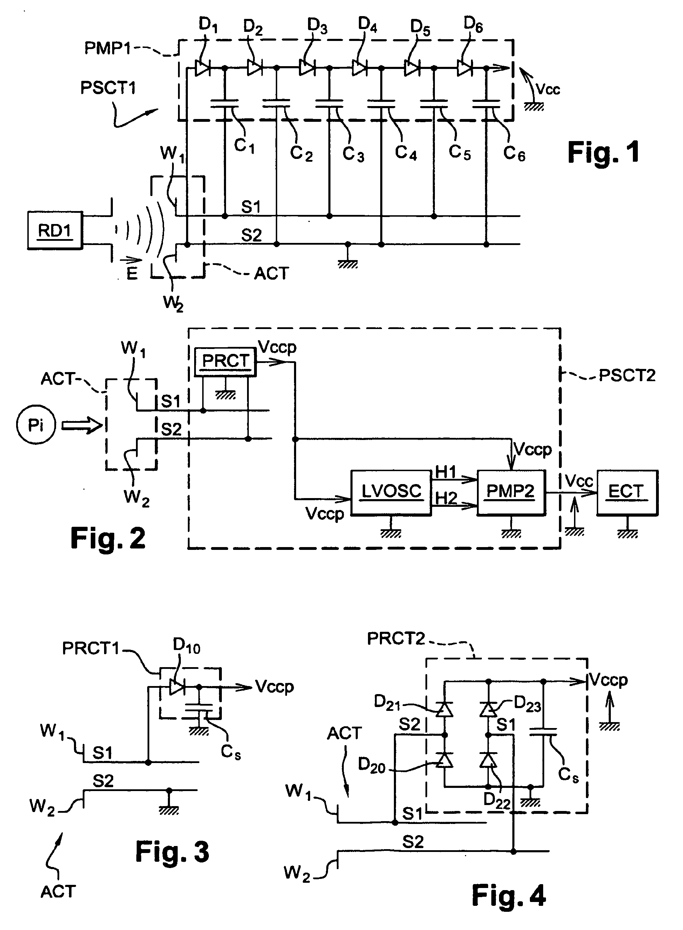

La figure 1 représente un circuit d'alimentation classique PSCT1 permettant de produire une tension continue Vcc à partir de signaux d'antenne UHF. Le circuit PSCT1 est constitué par une pompe de charge PMP1 qui est reliée à un circuit d'antenne ACT comprenant deux conducteurs W1, W2 formant un dipôle. En présence d'un champ électrique E situé dans la bande UHF, émis par exemple par un lecteur de circuit intégré sans contact RD1, des signaux d'antenne S1, S2 apparaissent dans les conducteurs W1, W2. Ces signaux d'antenne S1, S2 sont des signaux sinusoïdaux en opposition de phase et de faible amplitude, généralement quelques dixièmes de Volt seulement. Ils sont appliqués à la pompe de charge PMP1 en tant que signaux de pompage. La pompe de charge PMP1 fournit alors une tension continue Vcc de l'ordre du Volt à quelques Volt.

La pompe de charge PMP1 représentée sur la figure 1 comprend trois étages de pompage en cascade. Le premier: étage comprend une diode d'entrée D1, un condensateur d'entrée C1, une diode de sortie D2 et un condensateur de sortie C2. Le deuxième étage comprend une diode d'entrée D3, un condensateur d'entrée C3, une diode de sortie D4 et un condensateur de sortie C4. Le troisième et dernier étage comprend une diode d'entrée D5, un condensateur d'entrée C5, une diode de sortie D6 et un condensateur de sortie C6. Dans chaque étage, la cathode de la diode d'entrée D1, D3, D5 est connectée à l'anode du condensateur d'entrée C1, C3, C5 et à l'anode de la diode de sortie D2, D4, D6, dont la cathode est connectée à l'anode du condensateur de sortie C2, C4, C6. La cathode du condensateur d'entrée C1, C3, C5 est reliée au conducteur W1 et reçoit le signal d'antenne S1. La cathode du condensateur de sortie C2, C4, C6 est reliée au conducteur W2 et reçoit le signal d'antenne S2. Les étages étant en cascade, la cathode de la diode D2 est connectée à l'anode de la diode D3 et la cathode de la diode D4 est connectée à l'anode de la diode D6. A l'entrée de la pompe de charge, l'anode de la diode D1 est connectée au conducteur W2. A la sortie de la pompe de charge, le condensateur C6 fournit la tension Vcc. Le conducteur W2 est relié à la masse pour que la tension Vcc ne soit pas flottante.

A chaque demi-cycle des signaux S1, S2, la cathode des condensateurs C2, C4, ainsi que l'anode de la diode d'entrée D1, sont portées à un potentiel électrique plus élevé que le potentiel présent sur la cathode des condensateurs C1, C3, C5. Ainsi, le signal S2 transfère des charges électriques dans le condensateur C1 à travers la diode D1, et les condensateurs C2, C4 transfèrent des charges électriques dans les condensateurs C3, C5 à travers les diodes D3, D5. A chaque demi-cycle suivant, la cathode des condensateurs C1, C3, C5 est portée à un potentiel électrique plus élevé que le potentiel présent sur la cathode des condensateurs C2, C4, C6. Les condensateurs C1, C3, C5 transfèrent alors des charges électriques dans les condensateurs C2, C4, C6 à travers les diodes D2, D4, D6. Ainsi, si Vs est la différence de tension efficace entre les signaux d'antenne S1, S2 et si Vd est la tension de seuil des diodes, le gain en tension théorique de chaque étage de la pompe de charge est égal à 2Vs-2Vd soit par exemple 0,6 Volt si Vs est égale à 0,5 Volt et Vd égale à 0,2 Volt.

Ce procédé de conversion de signaux électriques UHF en tension continue Vcc au moyen d'une pompe de charges est couramment utilisé pour alimenter électriquement les circuits intégrés passifs UHF et est par exemple décrit par US 2002/0149482.

Les signaux d'antenne S1, S2 sont toutefois impropres à l'obtention d'un bon rendement de la pompe de charge (ratio entre la puissance fournie par la pompe de charge et la puissance incidente reçue par le circuit d'antenne). Il est en effet bien connu de l'homme de l'art qu'une pompe de charge présente un rendement optimal si elle est entraînée par des signaux de pompage ne se recouvrant pas, en parfaite opposition, de phase, et de préférence de forme carrée (créneaux de tension). Dans le cas contraire, le transfert de charges électriques ne s'effectue pas de façon optimale dans la pompe de charge. De plus, la fréquence très élevée des signaux d'antenne S1, S2 favorise les pertes électriques à travers diverses capacités parasites présentes entre les composants constituant la pompe de charge et un substrat sur lequel ces composants sont formés, généralement un substrat semi-conducteur.

En raison de ces diverses limitations techniques et technologiques dégradant le rendement de la pompe de charge, la tension continue obtenue est inférieure à celle que l'on obtiendrait avec des signaux S1, S2 de même amplitude mais de fréquence inférieure et de forme adaptée au pompage de charges.

Une autre technique connue pour générer une tension d'alimentation dans un circuit intégré sans contact est illustrée par US 2002/0056865 (Fig. 1). Cette technique consiste à générer la tension d'alimentation (VDD) au moyen d'un circuit de redressement (3) qui redresse les signaux d'antenne reçus par le circuit intégré. Cette tension d'alimentation est utilisée pour alimenter électriquement des organes analogiques et numériques (5, 6, 7) du circuit intégré qui assurent la réception et l'émission de données via le circuit d'antenne et génèrent un signal de pompage (CLK) appliqué à une pompe de charges (10) fournissant une tension d'alimentation survoltée (VDDM) à une mémoire (8) non volatile.

US 6 437 609 décrit également un circuit intégré sans contact comprenant un circuit (210) de redressement de signaux d'antenne fournissant une tension redressée (VR) qui est appliquée à un premier (221) et un second (240) régulateurs pour fournir une première (Vcc) et une seconde (Vdd) tensions d'alimentation. Les deux tensions d'alimentation (Vcc, Vdd) sont appliquées à une pompe de charges (230). La tension redressée (VR) alimente également un générateur de signal d'horloge (250) fournissant un signal d'horloge (OSC) à la pompe de charges. La pompe de charges fournit une haute tension (HV) supérieure aux tensions d'alimentation (Vcc, Vdd), pour effacer ou programmer une mémoire non volatile.

US 5 982 647 décrit également en relation avec sa figure 2 une technique consistant à générer une tension d'alimentation (Vcc) dans un circuit intégré par redressement de signaux d'antenne au moyen d'un circuit redresseur (Pd). La tension d'alimentation est utilisée pour activer un circuit oscillateur OSC (15) fournissant des signaux de pompage (H1, H2) à une pompe de charges (10) fournissant une hautes tension (Vhv) d'effacement programmation d'une mémoire non volatile (35).

Enfin, US 5 982 647 décrit en relation avec ses figures 4 et 5 un mode de réalisation dans lequel les signaux d'antenne sont appliqués à la pompe de charge (10) en tant que signaux de pompage, tandis que la tension (Vcc) d'alimentation du circuit intégré est toujours fournie par le circuit redresseur (Pd).

La présente invention vise un procédé pour produire une tension d'alimentation continue à partir de signaux d'antenne, qui présente un meilleur rendement que les procédés classiques décrits ci-dessus.

Cet objectif est atteint par la prévision d'un procédé pour générer une tension continue d'alimentation dans un circuit intégré, tel que décrit par la revendication 1

Selon un mode de réalisation, la tension primaire est produite par redressement simple alternance ou double alternance d'au moins un signal d'antenne.

Selon un mode de réalisation, la tension primaire est produite par pompage de charges simple étage en utilisant un premier condensateur recevant un premier signal d'antenne sur l'une de ses bornes et un second condensateur recevant un second signal d'antenne sur l'une de ses bornes.

Selon un mode de réalisation, les signaux de pompage ont une fréquence comprise entre 2 et 50 MHz.

Selon un mode de réalisation, l'oscillateur basse tension, la pompe de charge et le circuit électronique sont agencés sur une microplaquette de semi-conducteur commune.

Selon un mode de réalisation, le procédé est appliqué à un circuit électronique comprenant une mémoire non volatile et comprend une étape consistant à produire une tension d'effacement ou de programmation de la mémoire en survoltant la tension d'alimentation au moyen d'une seconde pompe de charge.

La présente invention concerne également un circuit intégré tel que décrit par la revendication 7.

Selon un mode de réalisation, le circuit redresseur est un redresseur simple alternance ou un pont redresseur double alternance.

Selon un mode de réalisation, le circuit redresseur est un simple étage de pompe de charge comportant un condensateur recevant un premier signal d'antenne sur l'une de ses bornes et un second condensateur recevant un second signal d'antenne sur l'une de ses bornes.

Selon un mode de réalisation, les signaux de pompage ont une fréquence comprise entre 2 et 50 MHz.

Selon un mode de réalisation, le circuit d'alimentation et le circuit électronique sont agencés sur une microplaquette de semi-conducteur commune.

Selon un mode de réalisation, le circuit électronique comprend une mémoire de données non volatile et une seconde pompe de charge pour survolter la tension d'alimentation et fournir une tension d'effacement ou de programmation de la mémoire.

Selon un mode de réalisation, le circuit électronique comprend une unité de contrôle pour exécuter des commandes de lecture ou d'écriture de la mémoire reçues via le circuit d'antenne.

La présente invention concerne également un objet portatif électronique comprenant un support portable et un circuit intégré selon l'invention, le circuit intégré étant implanté sur une microplaquette de semi-conducteur et la microplaquette de semi-conducteur étant fixée sur ou incorporée dans le support portable.

Ces objets, caractéristiques et avantages ainsi que d'autres de l'invention seront exposés plus en détail dans la description suivante d'un exemple de mise en oeuvre du procédé de l'invention et d'un exemple d'application de l'invention à un circuit intégré RFID, faite à titre non limitatif en relation avec les figures jointes parmi lesquelles :
- la figure 1 précédemment décrite représente un circuit d'alimentation classique fournissant une tension continue à partir de signaux d'antenne,
- la figure 2 représente sous forme de blocs un circuit d'alimentation selon l'invention fournissant une tension continue à partir de signaux d'antenne,
- les figures 3, 4, 5 illustrent trois exemples de réalisation d'un circuit redresseur représenté sous forme de bloc en figure 2,
- la figure 6 illustre un exemple de réalisation d'un oscillateur représenté sous forme de bloc en figure 2,
- les figures 7A, 7B illustrent l'aspect de signaux de pompage fournis par l'oscillateur,
- la figure 8 illustre un exemple de réalisation d'une pompe de charge représentée sous forme de bloc en figure 2, et
- la figure 9 représente schématiquement l'architecture d'un circuit intégré sans contact UHF utilisant le circuit d'alimentation selon l'invention en tant que circuit d'alimentation principal.

La figure 2 représente un circuit d'alimentation PSCT2 selon l'invention, fournissant une tension d'alimentation continue Vcc. A cet effet, le circuit PSCT2 est relié à un circuit d'antenne ACT du type décrit plus haut, comprenant deux conducteurs W1, W2 fournissant des signaux d'antenne S1, S2 en présence d'un champ électrique E.

Le circuit PSCT2 comprend trois éléments essentiels :
- un circuit redresseur primaire PRCT fournissant une tension continue primaire Vccp à partir des signaux d'antenne S1, S2 ou à partir de l'un de ces signaux,
- un oscillateur basse tension LVOSC alimenté électriquement par la tension primaire Vccp, fournissant des signaux de pompage H1, H2, et
- une pompe de charge PMP2 entraînée par les signaux de pompage H1, H2 et fournissant la tension continue Vcc par survoltage de la tension primaire Vccp.

Le circuit redresseur primaire PRCT est un circuit redresseur simple ou double alternance ou un circuit faiblement survolteur. Comme cela sera vu plus loin à l'aide d'exemples, ce circuit primaire comprend de préférence un faible nombre de composants pour limiter les pertes UHF (pertes à travers des capacités parasites dues à la fréquence élevée des signaux S1, S2). En effet, plus le nombre de composants fonctionnant en mode UHF est élevé, plus les pertes électriques sont importantes. Ainsi, en raison de la structure simple de ce circuit redresseur primaire, la tension primaire Vccp obtenue est de faible valeur et ne représente qu'une fraction de la tension Vcc. La tension Vccp est par exemple égale au tiers ou au quart de la tension Vcc visée, et est par exemple de l'ordre de 0,2 à 0,6 Volt pour une tension Vcc de 1,8 Volt.

L'oscillateur LVOSC est réalisé à partir de transistors basse tension, par exemple des transistors MOS de type natif (sans dopage de leur région de canal) ayant une faible tension de seuil, inférieure à la tension primaire Vccp. Par ailleurs, les signaux H1, H2 sont optimisés pour le pompage de charge et présentent ainsi une fréquence d'oscillation F0 de faible valeur se situant largement en dessous de la bande UHF, par exemple une fréquence F0 de l'ordre de 2 MHz à 50 MHz. De plus, les signaux H1, H2 sont préférentiellement des signaux carrés, soit des créneaux de tension, en opposition de phase et présentant des fronts montant et descendant à pente raide, dans les limites permises par la technologie.

La pompe de charge PMP2 est une pompe de charge classique qui présente ici un bon rendement car elle est entraînée par les signaux de pompage optimisés H1, H2 et reçoit la tension primaire Vccp sur son entrée de pompage. De ce fait, cette pompe de charge pourra généralement comprendre moins d'étages de pompage qu'une pompe de charge qui serait alimentée directement par les signaux S1, S2 et devrait fournir la même tension Vcc (Cf. figure 1, pompe de charge PMP1).

Grâce à la réduction des pertes UHF dans le circuit redresseur PRCT et l'optimisation du fonctionnement de la pompe de charge PMP2, le circuit d'alimentation PSCT2 présente un rendement supérieur de 5 à 25 % à celui de la pompe de charge PMP1 représentée en figure 1. Ce rendement peut être défini comme étant le rapport Po/Pi entre la puissance Po fournie par la pompe de charge PMP2 et la puissance incidence Pi absorbée par le circuit d'antenne.

Les figures 3, 4 et 5 illustrent trois exemples de réalisation PRCT1, PRCT2, PRCT3 du circuit redresseur PRCT.

Le circuit redresseur PRCT1 représenté en figure 3 est un circuit redresseur simple alternance comprenant une diode de redressement D10 et un condensateur de lissage Cs qui fournit la tension primaire Vccp. L'anode de la diode D10 est reliée au conducteur W1 du circuit d'antenne et reçoit le signal S1, le conducteur W2 étant connecté à la masse du circuit PRCT1. La cathode de la diode D10 est connectée à l'anode du condensateur Cs, dont la cathode est connectée à la masse.

Le circuit redresseur PRCT2 représenté en figure 4 est un circuit redresseur double alternance en pont de Graëtz, comprenant trois branches en parallèle. La première branche comprend des diodes D20, D21 en série, la seconde branche comprend des diodes D22, D23 en série et la troisième branche est formée par un condensateur de lissage Cs. L'anode des diodes D20, D22 est connectée à la masse du circuit redresseur, ainsi que la cathode du condensateur Cs. La cathode des diodes D21, D23 est connectée à l'anode du condensateur Cs qui fournit la tension primaire Vccp, la cathode du condensateur étant connectée à la masse. Le point milieu des diodes D20, D21 est relié au conducteur W1 du circuit d'antenne et reçoit le signal S1. Le point milieu des diodes D22, D23 est relié au conducteur W2 et reçoit le signal S2. Le redressement par pont de Graëtz étant de type flottant, les conducteurs W1, W2 ne sont pas reliés à la masse du circuit redresseur.

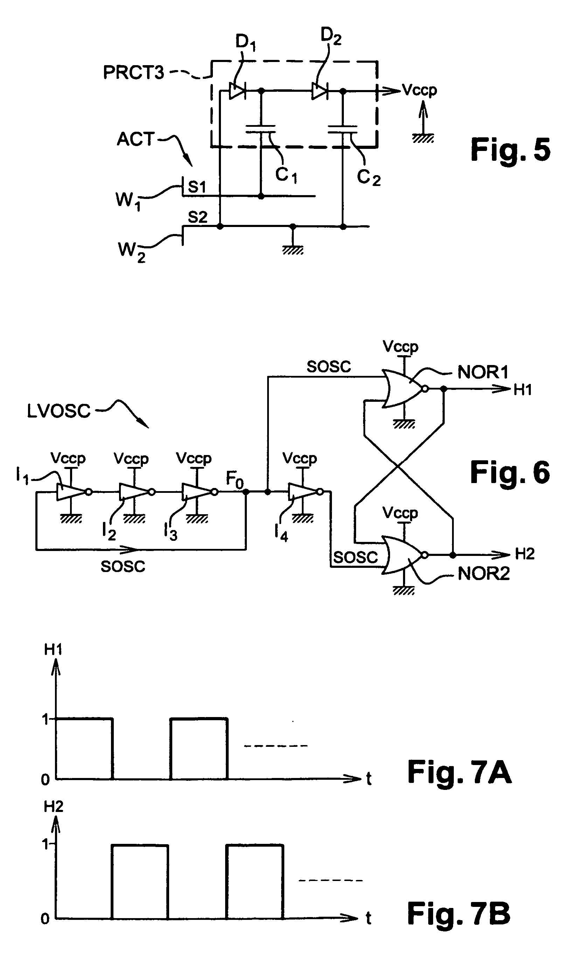

Le circuit redresseur PRCT3 représenté en figure 5 est l'équivalent d'un étage de pompe de charge. Plus particulièrement, le circuit PRCT3 est ici de même structure que le premier étage de la pompe de charge PMP1 représentée en figure 1 et comprend les diodes D1, D2 et les condensateurs C1, C2 déjà décrits, les références de ces éléments étant conservées. Ainsi, l'anode de la diode D1 est connectée au conducteur W2, qui est connecté à la masse du circuit redresseur. La cathode de la diode D1 est connectée à l'anode du condensateur C1 et à l'anode de la diode D2, dont la cathode est connectée à l'anode du condensateur C2. La cathode du condensateur C1 est connectée au conducteur W1 et la cathode du condensateur C2 est connectée au conducteur W2. L'anode du condensateur C2 fournit la tension Vccp. Le circuit redresseur PRCT3 est donc faiblement survolteur : si Vs est la différence de tension efficace entre les signaux d'antenne S1, S2 et si Vd est la tension de seuil des diodes, la tension Vccp théorique (sans tenir compte des pertes UHF) est égale à 2Vs-2Vd, par exemple 0,6 Volt si Vs est égale à 0,5 Volt et Vd égale à 0,2 Volt.

La figure 6 illustre un exemple de réalisation de l'oscillateur LVOSC. L'oscillateur comprend quatre portes inverseuses I1, I2, I3, I4 et deux portes NOR1, NOR2 à deux entrées (portes OU EXCLUSIF). Ces diverses portes logiques sont réalisées à partir de transistors basse tension, et sont alimentées électriquement par la tension primaire Vccp.

Les portes I1, I2, I3 sont agencées en série et la sortie de la porte I3 est renvoyée sur l'entrée de la porte I1. Les portes I1, I2, I3 forment ainsi une boucle d'oscillateur appelée oscillateur en anneau (ring oscillator) dans laquelle circule un signal oscillant SOSC ayant une fréquence d'oscillation F0. Cette fréquence F0 est contrôlée en dimensionnant les transistors formant les portes inverseuses de manière à obtenir un temps de commutation des portes déterminé.

Le signal de pompage H1 est fourni par la porte NOR1 et le signal de pompage H2 est fourni par la porte NOR2. A cet effet la première entrée de la porte NOR1 reçoit le signal SOSC, qui est par exemple prélevé à la sortie de la porte I3, et la seconde entrée de cette porte est connectée à la sortie de la porte NOR2. La première entrée de la porte NOR2 reçoit un signal /SOSC inverse du signal SOSC, fourni par la porte 14, et la seconde entrée de cette porte est connectée à la sortie de la porte NOR1. Les deux portes forment ainsi l'équivalent d'une bascule RS qui reçoit le signal /SOSC sur son entrée R (Reset) et le signal SOSC sur son entrée S (Set). Ainsi, avec des moyens simples, peu encombrants et consommant peu d'énergie électrique, les deux signaux de pompage H1, H2, représentés sur les figures 7A, 7B, sont en opposition de phase, sont de forme carrée et ne se recouvrent pas (en négligeant les temps de commutation des portes NOR1, NOR2, soit les pentes des fronts montant et descendant des signaux H1, H2).

L'homme de l'art notera qu'un oscillateur en anneau ne présente généralement pas une fréquence d'oscillation stable dans le temps et/ou en fonction de la température. Toutefois, une fréquence stable n'est aucunement nécessaire à la mise en oeuvre de l'invention et les variations éventuelles de la fréquence F0, de l'ordre de quelques pourcents, ont un impact négligeable sur le gain de la pompe de charge PMP2.

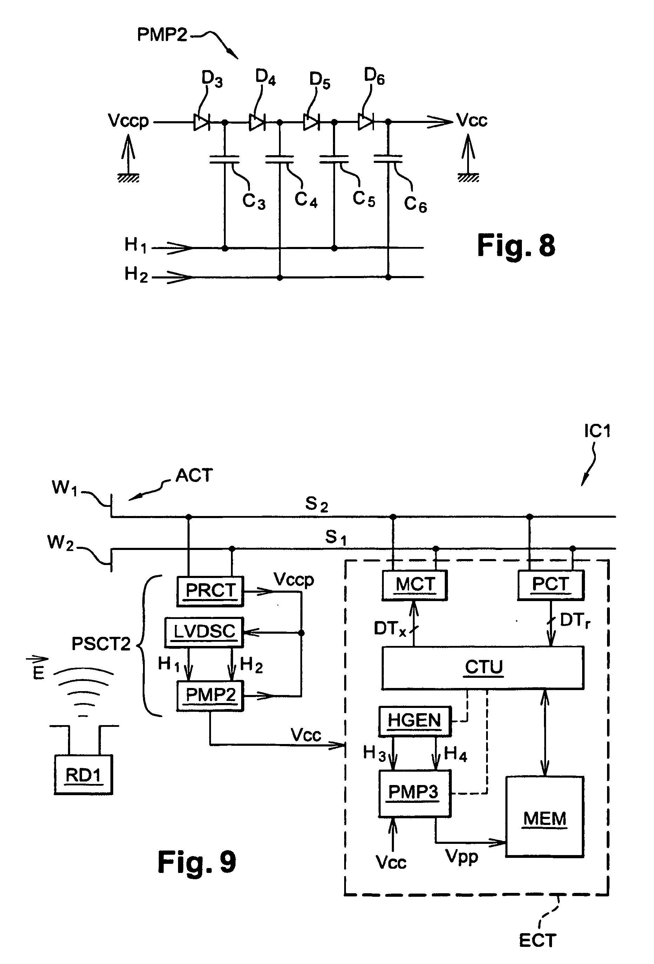

La figure 8 illustre un exemple de réalisation de la pompe de charge PMP2. La pompe de charge comprend deux étages de pompage et est ici de même structure que les deux derniers étages de la pompe de charge PMP1 représentée en figure 1. Le premier étage comprend ainsi la diode d'entrée D3, le condensateur d'entrée C3, la diode de sortie D4 et le condensateur de sortie C4, les références de ces éléments étant conservées. Le second et dernier étage comprend la diode d'entrée D5, le condensateur d'entrée C5, la diode de sortie D6 et le condensateur de sortie C6. Dans chaque étage, la cathode de la diode d'entrée D3, D5 est connectée à l'anode du condensateur d'entrée C3, C5 et à l'anode de la diode de sortie D4, D6, dont la cathode est connectée à l'anode du condensateur de sortie C4, C6. La cathode du condensateur d'entrée C3, C5 reçoit le signal H1 et la cathode du condensateur de sortie C4, C6 reçoit le signal H2. L'anode de la diode D3 reçoit la tension primaire Vccp, la cathode de la diode D4 est connectée à l'anode de la diode D6 et le condensateur C6 fournit la tension Vcc.

Lorsque le circuit PRCT est réalisé comme illustré en figure 5 (circuit PRCT3) et la pompe de charge réalisée comme illustré en figure 8, il apparaît que le circuit d'alimentation PSCT2 selon l'invention est obtenu en faisant éclater la pompe de charge classique PMP1 (fig. 1) en une première partie utilisée pour fournir la tension primaire Vccp et en une seconde partie utilisée pour fournir la tension Vcc, en interposant l'oscillateur LVOSC entre la première et la seconde partie, pour fournir à la seconde partie des signaux de pompage optimisés. Ainsi, l'invention nécessite seulement l'ajout d'un nombre réduit de composants, pour former l'oscillateur LVOSC, et cela est largement compensé par l'amélioration du rendement du circuit d'alimentation.

Dans une application de l'invention, la tension Vcc alimente un circuit électronique ECT représenté sous forme de bloc en figure 2. Le circuit d'alimentation PSCT2 et le circuit électronique ECT sont préférentiellement réalisés sur un même substrat semi-conducteur. Ils comportent chacun leur propre ligne d'alimentation, l'une pour véhiculer la tension primaire Vccp, l'autre pour véhiculer la tension d'alimentation Vcc, et une ligne de masse commune. Le circuit de redressement primaire PRCT peut toutefois être implanté sur un substrat spécifique à faibles pertes UHF (par exemple un substrat céramique pour circuit micro-ondes) si l'application visée le permet et si cela est justifié (par exemple si la fréquence de travail est extrêmement élevée et se trouve dans la limite extrême de la bande UHF).

La figure 9 illustre un exemple de réalisation d'un circuit intégré sans contact IC1 comportant :
1) le circuit d'antenne ACT comportant les conducteurs W1, W2,
2) le circuit d'alimentation PSCT2 selon l'invention, et
3) un circuit électronique ECT pour transpondeur UHF, alimenté par la tension continue Vcc fournie par le circuit PSCT2.

En présence d'un champ électrique E émis par un lecteur RD1, les signaux d'antenne S1, S2 activent le circuit d'alimentation PSCT2 qui fournit alors la tension Vcc au circuit ECT. Le circuit intégré IC1 bascule alors de l'état hors tension à un état activé.

Le circuit ECT comprend ici un circuit modulateur MCT et un circuit démodulateur DCT reliés au circuit d'antenne, une unité de contrôle CTU, une mémoire non volatile MEM, par exemple une mémoire EEPROM (mémoire ROM effaçable et programmable électriquement), une pompe de charge PMP3 et un générateur HGEN.

La pompe de chargez PMP3 reçoit la tension Vcc en tant que tension d'entrée à survolter, et fournit une haute tension Vpp d'effacement et de programmation de la mémoire MEM, par exemple une tension de l'ordre de 10 à 15 Volt. Le générateur HGEN est alimenté par la tension Vcc et fournit des signaux de pompage H3, H4 à la pompe de charge PMP3. L'activation de la pompe de charge PMP3 et du générateur HGEN est contrôlée par l'unité de contrôle CTU et intervient lorsque des données doivent être écrites dans la mémoire.

Au cours d'une communication avec le circuit intégré ICI, le lecteur RD1 envoie des données DTr en modulant le champ électrique E, par exemple en appliquant au champ électrique une modulation d'amplitude. La modulation d'amplitude se répercute sur les signaux d'antenne S1, S2. Le circuit DCT démodule les signaux S1, S2 et fournit à l'unité CTU les données DTr véhiculées par ces signaux.

L'unité de contrôle CTU fournit au circuit de modulation MCT des données DTx à émettre, généralement sous forme codée, et celui-ci module l'impédance du circuit d'antenne ACT en fonction de ces données. Une telle modulation d'impédance se répercute dans le lecteur RD1 sous la forme d'un signal d'antenne auxiliaire apparaissant dans son propre circuit d'antenne. Le lecteur RD1 extrait ce signal auxiliaire au moyen de filtres appropriés et en déduit les données DTx.

L'unité CTU contrôle les divers éléments présents dans le circuit ECT, supervise les communications et l'exécution des éventuels protocoles de sécurité (par ex. vérification de mots de passe), ainsi que l'exécution de commandes envoyées par le lecteur RD1, notamment des commandes de lecture ou d'écriture de la mémoire MEM. L'unité de contrôle envoie également des réponses à des commandes via le circuit de modulation MCT, sous forme de données DTx.

Lorsqu'une commande d'écriture est reçue, l'unité CTU active le circuit HGEN afin que la pompe de charge PMP3 reçoive les signaux de pompage H3, H4 et fournisse la tension Vpp. L'unité CTU applique ensuite à la mémoire une adresse d'écriture et les données à écrire, puis applique la tension Vpp à la mémoire MEM en fermant un circuit interrupteur ou un générateur de rampe contrôlant l'application de la tension Vpp à la mémoire (non représenté).

L'architecture du circuit intégré IC1, connue de l'homme de l'art, ne sera pas décrite plus en détail. En particulier, le circuit intégré IC1 peut être réalisé conformément aux spécifications industrielles EPCTM-GEN2 (*"Radio-Frequency Identity Protocols Class-1 Generation-2 - UHF RFID Protocol for Communications at 860 MHz - 960 MHz*") en cours de normalisation.

Les circuits intégrés sans contact du type de celui qui vient d'être décrit, sont généralement appelés des circuits intégrés RFID (Radio Frequency Identification) et sont utilisés dans diverses applications comme la réalisation d'étiquettes électroniques et la réalisation de cartes à puce sans contact, notamment de porte-monnaies électroniques, de cartes de contrôle d'accès, de cartes de transport, etc..

Outre les circuits intégrés sans contact UHF, l'invention s'applique également aux circuits intégrés sans contact fonctionnant en présence d'un champ électrique de fréquence supérieure à la bande UHF, par exemple 10 GHz. De façon générale, l'invention s'applique à tout type de circuit intégré sans contact nécessitant un champ d'activation pour générer des signaux d'antenne et produire une tension continue à partir de ces signaux d'antenne. Ce champ d'activation peut être le champ électrique décrit plus haut mais peut également être un champ magnétique.

L'invention s'applique également aux circuits de type PICC ("Proximity Inductive Coupling Circuits" ou "circuits à couplage inductif de proximité"), notamment les circuits intégrés non-UHF conformes à l'une des normes ISO/IEC 14443A/B, ISO/IEC 15693. De tels circuits fonctionnent en présence d'un champ magnétique oscillant à 13,56 MHz et leur circuit d'antenne comporte une bobine d'antenne.

Grâce au meilleur rendement du circuit d'alimentation, l'invention offre divers avantages, notamment une plus grande distance de communication entre le circuit intégré et le lecteur émettant le champ d'activation, électrique ou magnétique.

Bien que l'invention soit initialement destinée à des circuits intégrés de type passif, l'invention est également applicable à des circuits intégrés équipés d'une source d'alimentation autonome telle une pile électrique. Dans ce cas, la tension Vcc fournie par le circuit d'alimentation selon l'invention est utilisable comme tension d'alimentation auxiliaire, par exemple en cas de dysfonctionnement de la source d'alimentation autonome, ou pour alimenter certaines parties du circuit intégré, ou encore pour recharger la source d'alimentation autonome.

Un circuit intégré selon l'invention permet de réaliser tout type d'objet portatif électronique comprenant un support portable sur lequel le circuit intégré est fixé ou dans lequel il est incorporé.

## Revendications

1. Procédé pour générer une tension continue d'alimentation (Vcc) dans un circuit intégré comprenant un circuit d'antenne (ACT) et un circuit électronique (ECT) comprenant une unité de contrôle (CTU) pour émettre et recevoir des données par l'intermédiaire du circuit d'antenne,
procédé dans lequel la tension d'alimentation (Vcc) est générée à partir de signaux d'antenne haute fréquence (S1, S2) et est utilisée pour alimenter électriquement le circuit électronique (ECT),
**caractérisé en ce qu'**il comprend les étapes consistant à :
- produire une tension continue primaire (Vccp) égale à une fraction de la tension d'alimentation (Vcc) à partir d'au moins un signal d'antenne (S1, S2),
- produire au moins deux signaux de pompage (H1, H2) ayant une fréquence inférieure à la fréquence des signaux d'antenne, au moyen d'un oscillateur (LVOSC) alimenté électriquement par la tension primaire (Vccp), et
- survolter la tension primaire (Vccp) au moyen d'une pompe de charge (PMP2) entraînée par les signaux de pompage (H1, H2), pour obtenir la tension d'alimentation (Vcc) qui alimente le circuit électronique (ECT) comprenant l'unité de contrôle (CTU).

2. Procédé selon la revendication 1, dans lequel la tension primaire (Vccp) est produite par redressement simple alternance ou double alternance d'au moins un signal d'antenne (S1, S2).

3. Procédé selon la revendication 1, dans lequel la tension primaire (Vccp) est produite par pompage de charges simple étage en utilisant un premier condensateur (C1) recevant un premier signal d'antenne (S1) sur l'une de ses bornes et un second condensateur (C2) recevant un second signal d'antenne (S2) sur l'une de ses bornes.

4. Procédé selon l'une des revendications 1 à 3, dans lequel les signaux de pompage (H1, H2) ont une fréquence comprise entre 2 et 50 MHz.

5. Procédé selon l'une des revendications 1 à 4, dans lequel l'oscillateur basse tension (LVOSC), la pompe de charge (PMP2) et le circuit électronique (ECT) sont agencés sur une microplaquette de semi-conducteur commune.

6. Procédé selon l'une des revendications 1 à 5, appliqué à un circuit électronique (ECT) comprenant une mémoire non volatile (MEM), et comprenant une étape consistant à produire une tension (Vcc) d'effacement ou de programmation de la mémoire en survoltant la tension d'alimentation (Vcc) au moyen d'une seconde pompe de charge (PMP3).

7. Circuit intégré (ICI) comprenant un circuit d'antenne (ACT), un circuit électronique (ECT) comprenant une unité de contrôle (CTU) pour émettre et recevoir des données par l'intermédiaire du circuit d'antenne, et un circuit d'alimentation (PSCT2) pour fournir une tension d'alimentation continue (Vcc) au circuit électronique (ECT) à partir de signaux d'antenne alternatifs (S1, S2), **caractérisé en ce que** le circuit d'alimentation (PSCT2) comprend :
- un circuit redresseur (PRCT, PRCT1, PRCT2n PRCT3) recevant au moins l'un des signaux d'antenne (S1, S2), pour fournir une tension continue primaire (Vccp) égale à une fraction de la tension d'alimentation (Vcc),
- un oscillateur (LVOSC) alimenté électriquement par la tension primaire (Vccp), pour fournir au moins deux signaux de pompage (H1, H2) ayant une fréquence inférieure à la fréquence des signaux d'antenne, et
- une pompe de charge (PMP2) entraînée par les signaux de pompage (H1, H2), pour survolter la tension primaire (Vccp) et produire la tension d'alimentation (Vcc) qui alimente le circuit électronique (ECT) comprenant l'unité de contrôle (CTU).

8. Circuit intégré selon la revendication 7, dans lequel le circuit redresseur (PRCT) est un redresseur simple alternance (PRCT1) ou un pont redresseur double alternance (PRCT2).

9. Circuit intégré selon la revendication 7, dans lequel le circuit redresseur (PRCT) est un simple étage de pompe de charge (PRCT3) comportant un condensateur (C1) recevant un premier signal d'antenne (S1) sur l'une de ses bornes et un second condensateur (C2) recevant un second signal d'antenne (S2) sur l'une de ses bornes.

10. Circuit intégré selon l'une des revendications 7 à 9, dans lequel les signaux de pompage (H1, H2) ont une fréquence comprise entre 2 et 50 MHz.

11. Circuit intégré selon l'une des revendications 7 à 10, dans lequel le circuit d'alimentation (PSCT2) et le circuit électronique (ECT) sont agencés sur une microplaquette de semi-conducteur commune.

12. Circuit intégré selon l'une des revendications 7 à 11, dans lequel le circuit électronique (ECT) comprend une mémoire de données non volatile (MEM) et une seconde pompe de charge (PMP3) pour survolter la tension d'alimentation (Vcc) et fournir une tension (Vpp) d'effacement ou de programmation de la mémoire.

13. Circuit électronique selon la revendication 12, comprenant une unité de contrôle (CTU) pour exécuter des commandes de lecture ou d'écriture de la mémoire reçues via le circuit d'antenne (ACT, W1, W2).

14. Objet portatif électronique comprenant un support portable et un circuit intégré selon l'une des revendications 7 à 13, le circuit intégré étant implanté sur une microplaquette de semi-conducteur et la microplaquette de semi-conducteur étant fixée sur ou incorporée dans le support portable.

## Claims

1. Method for generating a direct power supply voltage (Vcc) in an integrated circuit comprising an antenna circuit (ACT) and an electronic circuit (ECT) comprising a control unit (CTU) for sending and receiving data through the antenna circuit,
wherein the power supply voltage (Vcc) is generated from high frequency antenna signals (S1, S2) and is used to electrically power the electronic circuit (ECT),
**characterized in that** it comprises:
- producing a primary direct voltage (Vccp) equal to a fraction of the power supply voltage (Vcc) from at least one antenna signal (S1, S2),
- producing at least two pumping signals (H1, H2) having a frequency lower than the frequency of the antenna signals, by means of an oscillator (LVOSC) electrically powered by the primary voltage (Vccp), and
- boosting the primary voltage (Vccp) by means of a charge pump (PMP2) driven by the pumping signals (H1, H2), to obtain the power supply voltage (Vcc) which powers the electronic circuit (ECT) comprising the control unit (CTU).

2. Method according to claim 1, wherein the primary voltage (Vccp) is produced by half-wave or full-wave rectification of at least one antenna signal (S1, S2).

3. Method according to claim 1, wherein the primary voltage (Vccp) is produced by pumping simple stage charges using a first capacitor (C1) receiving a first antenna signal (S1) on one of its terminals and a second capacitor (C2) receiving a second antenna signal (S2) on one of its terminals.

4. Method according to one of claims 1 to 3, wherein the pumping signals (H1, H2) have a frequency comprised between 2 and 50 MHz.

5. Method according to one of claims 1 to 4, wherein the low voltage oscillator (LVOSC), the charge pump (PMP2) and the electronic circuit (ECT) are arranged on a common semiconductor chip.

6. Method according to one of claims 1 to 5, applied to an electronic circuit (ECT) comprising a non volatile memory (MEM), and comprising producing a voltage (Vcc) for erasing or programming the memory by boosting the power supply voltage (Vcc) by means of a second charge pump (PMP3).

7. Integrated circuit (IC1) comprising an antenna circuit (ACT), an electronic circuit (ECT) comprising a control unit (CTU) for sending and receiving data through the antenna circuit, and a power supply circuit (PSCT2) for supplying a direct power supply voltage (Vcc) to the electronic circuit (ECT) from alternating antenna signals (S1, S2), **characterized in that** the power supply circuit (PSCT2) comprises:
- a rectifier circuit (PRCT, PRCT1, PRCT2n, PRCT3) receiving at least one of the antenna signals (S1, S2), for supplying a primary direct voltage (Vccp) equal to a fraction of the power supply voltage (Vcc),
- an oscillator (LVOSC) electrically powered by the primary voltage (Vccp), for supplying at least two pumping signals (H1, H2) having a frequency lower than the frequency of the antenna signals, and
- a charge pump (PMP2) driven by the pumping signals (H1, H2), for boosting the primary voltage (Vccp) and producing the power supply voltage (Vcc) which powers the electronic circuit (ECT) comprising the control unit (CTU).

8. Integrated circuit according to claim 7, wherein the rectifier circuit (PRCT) is a half-wave rectifier (PRCT1) or a full-wave rectifier bridge (PRCT2).

9. Integrated circuit according to claim 7, wherein the rectifier circuit (PRCT) is a simple stage of charge pump (PRCT3) comprising a capacitor (C1) receiving a first antenna signal (S1) on one of its terminals and a second capacitor (C2) receiving a second antenna signal (S2) on one of its terminals.

10. Integrated circuit according to one of claims 7 to 9, wherein the pumping signals (H1, H2) have a frequency comprised between 2 and 50 MHz.

11. Integrated circuit according to one of claims 7 to 10, wherein the power supply circuit (PSCT2) and the electronic circuit (ECT) are arranged on a common semiconductor chip.

12. Integrated circuit according to one of claims 7 to 11, wherein the electronic circuit (ECT) comprises a non volatile data memory (MEM) and a second charge pump (PMP3) for boosting the power supply voltage (Vcc) and supplying a voltage (Vpp) for erasing or programming the memory.

13. Electronic circuit according to claim 12, comprising a control unit (CTU) for executing commands for reading or writing the memory received via the antenna circuit (ACT, W1, W2).

14. Electronic portable object comprising a portable support and an integrated circuit according to one of claims 7 to 13, the integrated circuit being embedded on a semiconductor chip and the semiconductor chip being fixed on or integrated into the portable support.

## Patentansprüche

1. Verfahren zur Erzeugung einer Versorgungsgleichspannung (Vcc) in einem integrierten Schaltkreis umfassend einen Antennenkreis (ACT) und einen elektronischen Schaltkreis (ECT), der eine Steuereinheit (CTU) zum Senden und Empfangen von Daten über den Antennenkreis umfasst,
Verfahren, in dem die Versorgungsspannung (Vcc) ausgehend von hochfrequenten Antennensignalen (S1, S2) erzeugt wird und zur elektrischen Speisung des elektronischen Schaltkreises (ECT) verwendet wird,
**dadurch gekennzeichnet, dass** das Verfahren Schritte umfasst, die darin bestehen:
- ausgehend von wenigstens einem Antennensignal (S1, S2) eine primäre Gleichspannung (Vccp) zu erzeugen, die gleich einem Bruchteil der Versorgungsspannung (Vcc) ist,
- mittels eines durch die Primärspannung (Vccp) elektrisch gespeisten Oszillators (LVOSC) wenigstens zwei Pumpsignale (H1, H2) zu erzeugen, deren Frequenz kleiner ist als die Frequenz der Antennensignale, und
- die Primärspannung (Vccp) mittels einer von den Pumpsignalen (H1, H2) angetriebenen Ladepumpe (PMP2) hinaufzuspannen, um die Versorgungsspannung (Vcc) zu erhalten, die den die Steuereinheit (CTU) umfassenden elektronischen Schaltkreis (ECT) speist.

2. Verfahren nach Anspruch 1, bei dem die Primärspannung (Vccp) durch Einweg- oder Vollweggleichrichtung wenigstens eines Antennensignals (S1, S2) erzeugt wird.

3. Verfahren nach Anspruch 1, bei dem die Primärspannung (Vccp) durch einstufiges Ladungspumpen erzeugt wird, und zwar unter Verwendung eines ersten Kondensators (C1), der ein erstes Antennensignal (S1) auf einer seiner Anschlussklemmen empfängt, und eines zweiten Kondensators (C2), der ein zweites Anntennensignal (S2) auf einer seiner Anschlussklemmen empfängt.

4. Verfahren nach einem der Ansprüche 1 bis 3, bei dem die Pumpsignale (H1, H2) eine Frequenz zwischen 2 und 50 MHz aufweisen.

5. Verfahren nach einem der Ansprüche 1 bis 4, bei dem der Niederspannungsoszillator (LVOSC), die Ladepumpe (PMP2) und der elektronische Schaltkreis (ECT) auf einem gemeinsamen Halbleiter-Mikroplättchen angeordnet sind.

6. Verfahren nach einem der Ansprüche 1 bis 5, angewandt auf einen elektronischen Schaltkreis (ECT), der einen nichtflüchtigen Speicher (MEM) umfasst, und umfassend einen Schritt, der darin besteht, eine Speicherlösch- oder -programmierspannung (Vcc) zu erzeugen, indem die Versorgungsspannung (Vcc) mittels einer zweiten Ladepumpe (PMP3) hinaufgespannt wird.

7. Integrierter Schaltkreis (IC1) umfassend einen Antennenkreis (ACT), einen eine Steuereinheit (CTU) zum Senden und Empfangen von Daten über den Antennenkreis umfassenden elektronischen Schaltkreis (ECT), und einen Speisestromkreis (PSCT2), um dem elektronischen Schaltkreis (ECT) ausgehend von Wechselsignalen der Antenne (S1, S2) eine Versorgungsgleichspannung (Vcc) zuzuführen, **dadurch gekennzeichnet dass** der Speisestromkreis (PSCT2) folgendes umfasst :
- eine wenigstens eines der Antennensignale (S1, S2) empfangenden Gleichrichterschaltung (PRCT, PRCT1, PRCT2, PRCT3), um eine primäre Gleichspannung zu liefern, die gleich einem Bruchteil der Versorgungsspannung (Vcc) ist,
- einen durch die Primärspannung (Vccp) elektrisch gespeisten Oszillator (LVOSC), um wenigstens zwei Pumpsignale (H1, H2) zu liefern, deren Frequenz kleiner ist als die Frequenz der Antennensignale, und
- eine durch die Pumpsignale (H1, H2) angetriebene Ladepumpe (PMP2), um die Primärspannung (Vccp) hinaufzuspannen und die Versorgungsspannung (Vcc) zu erzeugen, die den die Steuereinheit (CTU) umfassenden elektronischen Schaltkreis (ECT) speist.

8. Integrierter Schaltkreis nach Anspruch 7, bei dem die Gleichrichterschaltung (PRCT) ein Einweggleichrichter (PRCT1) oder ein Vollweg-Brückengleichrichter (PRCT2) ist.

9. Integrierter Schaltkreis nach Anspruch 7, bei dem die Gleichrichterschaltung (PRCT) einfach eine Stufe der Ladepumpe (PRCT3) ist, die einen Kondensator (C1) umfasst, der ein erstes Antennensignal (S1) auf einer seiner Anschlussklemmen empfängt, sowie einen zweiten Kondensator (C2), der ein zweites Antennensignal (S2) auf einer seiner Anschlussklemmen empfängt.

10. Integrierter Schaltkreis nach einem der Ansprüche 7 bis 9, bei dem die Pumpsignale (H1, H2) eine Frequenz zwischen 2 und 50 MHz aufweisen.

11. Integrierter Schaltkreis nach einem der Ansprüche 7 bis 10, bei dem der Versorgungskreislauf (PSCT2) und der elektronische Schaltkreis (ECT) auf einem gemeinsamen Halbleiter-Mikroplättchen angeordnet sind.

12. Integrierter Schaltkreis nach einem der Ansprüche 7 bis 11, bei dem der elektronische Schaltkreis (ECT) einen nichtflüchtigen Datenspeicher (MEM) umfasst, sowie eine zweite Ladepumpe (PMP3), um die Versorgungsspannung (Vcc) hinaufzuspannen und eine Speicherlösch- oder -programmierungsspannung (Vpp) zu liefern.

13. Elektronischer Schaltkreis nach Anspruch 12, umfassend eine Steuereinheit (CTU), um über den Antennenkreis (ACT, W1, W2) erhaltene Befehle zum Auslesen oder Einschreiben des Speichers auszuführen.

14. Tragbarer elektronischer Gegenstand, umfassend einen tragbaren Träger und einen integrierten Schaltkreis nach einem der Ansprüche 7 bis 13, wobei der integrierte Schaltkreis auf ein Halbleiter-Mikroplättchen aufgebracht ist und das Halbleiter-Mikroplättchen auf dem tragbaren Träger befestigt oder in diesen eingebaut ist.
